(19) Europäisches Patentamt / European Patent Office / Office européen des brevets

(11) **EP 4 344 118 A1**

(12) **EUROPEAN PATENT APPLICATION**
published in accordance with Art. 153(4) EPC

(43) Date of publication:
**27.03.2024 Bulletin 2024/13**

(21) Application number: **23807883.6**

(22) Date of filing: **16.05.2023**

(51) International Patent Classification (IPC):
**H04L 5/00** (2006.01)    **H04W 56/00** (2009.01)
**H04J 11/00** (2006.01)    **H04W 74/08** (2024.01)
**H04W 72/23** (2023.01)    **H04W 72/04** (2023.01)
**H04W 48/10** (2009.01)    **H04W 76/28** (2018.01)
**H04L 27/26** (2006.01)

(52) Cooperative Patent Classification (CPC):
**H04J 11/00; H04L 5/00; H04L 27/26; H04W 48/10;**
**H04W 56/00; H04W 72/04; H04W 72/23;**
**H04W 74/08; H04W 76/28**

(86) International application number:
**PCT/KR2023/006628**

(87) International publication number:
**WO 2023/224364 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.05.2022   KR 20220059718**
**17.05.2022   US 202263343049 P**
**19.05.2022   KR 20220061646**
**10.08.2022   KR 20220100226**

(71) Applicant: **LG Electronics Inc.**
**Yeongdeungpo-gu**
**Seoul 07336 (KR)**

(72) Inventors:
• **KIM, Seonwook**
**Seoul 06772 (KR)**
• **KO, Hyunsoo**
**Seoul 06772 (KR)**
• **YANG, Suckchel**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING/RECEIVING SIGNALS IN WIRELESS COMMUNICATION SYSTEM**

(57) Disclosed herein are a method and apparatus for transmitting and receiving signals in a wireless communication system. The method and apparatus include an operation of receiving a second synchronization signal block (SSB) based on a first SSB. Specifically, (i) a global synchronization channel number (GSCN) of the first SSB, (ii) a step size, and (iii) a GSCN offset may be used to receive the second SSB.

[Fig. 5]

EP 4 344 118 A1

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

The object of the present disclosure is to provide a signal transmission and reception method for efficiently transmitting and receiving control and data signals in a wireless communication system and apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for transmitting and receiving a signal in a wireless communication system.
In an aspect of the present disclosure, there is provided a method of receiving a signal by a user equipment (UE) in a wireless communication system. The method may include: detecting a first synchronization signal and physical broadcast channel block (SSB); based on a determination that there is no control resource set (CORESET) for a Type0-physical downlink control channel (Type0-PDCCH) common search space (CSS) set in the first SSB, determining a nearest global synchronization channel number (GSCN) of a second SSB having a CORESET for the Type0-PDCCH CSS set; and receiving the second SSB based on the nearest GSCN. The nearest GSCN is determined based on (i) a GSCN of the first SSB, (ii) a step size, and (iii) a GSCN offset, and the step size is determined based on a frequency band in which the first SSB is detected.
In another aspect of the present disclosure, there is provided a method of transmitting a signal by a base station (BS) in a wireless communication system. The method may include: transmitting a first SSB having no CORESET for a Type0-PDCCH CSS set; and transmitting a second SSB having a CORESET for the Type0-PDCCH CSS set. A nearest GSCN of the second SSB is determined based on (i) a GSCN of the first SSB, (ii) a step size, and (iii) a GSCN offset, and the step size is determined based on a frequency band in which the first SSB is detected.
In another aspect of the present disclosure, there are provided an apparatus, a processor, and a storage medium for performing the signal transmission and reception method.
The apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

**ADVANTAGEOUS EFFECTS**

According to one embodiment of the present disclosure, when control and data signals are transmitted and received between communication devices, the signals may be transmitted and received more efficiently based on operations different from those in the prior art
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is a diagram illustrating a synchronization signal block (SSB) structure.
FIGS. 5 to 6 illustrate signal transmission and reception methods according to the embodiments of the present disclosure.
FIGS. 7 to 10 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

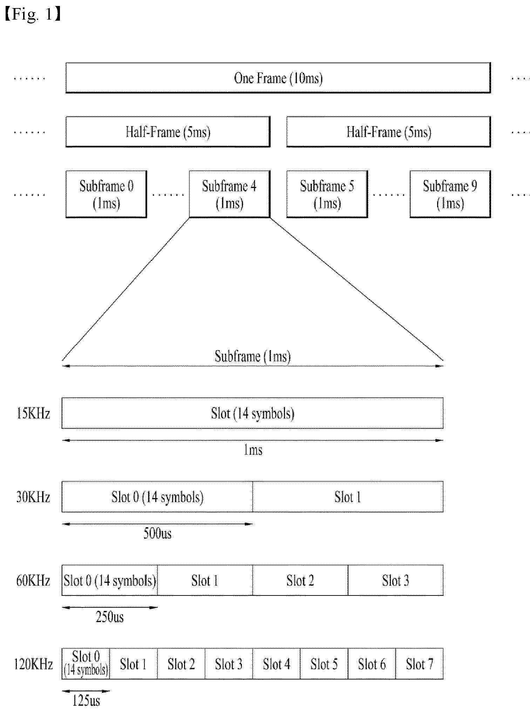

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

* $N^{slot}_{symb}$: number of symbols in a slot

* $N^{frame,u}_{slot}$: number of slots in a frame

* $N^{subframe,u}_{slot}$: number of slots in a subframe

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one user equipment (UE). Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60,kHz |
| FR2 | 24250MHz - 52600MHz | 60, 120, 240kHz |

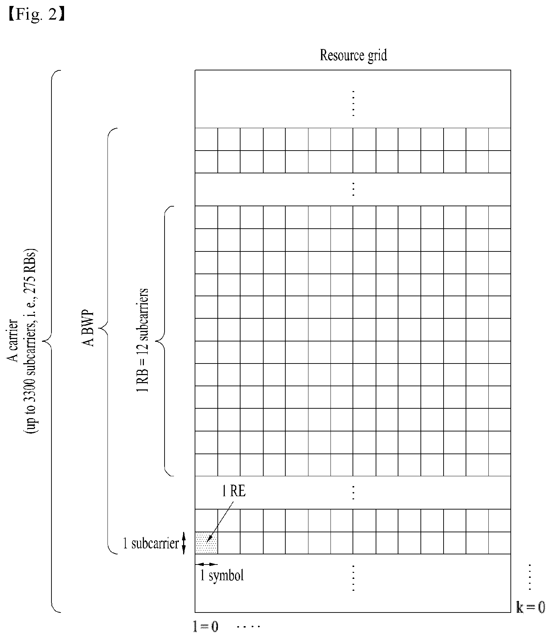

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

In the present disclosure, a base station (BS) may be, for example, a gNode B (gNB).

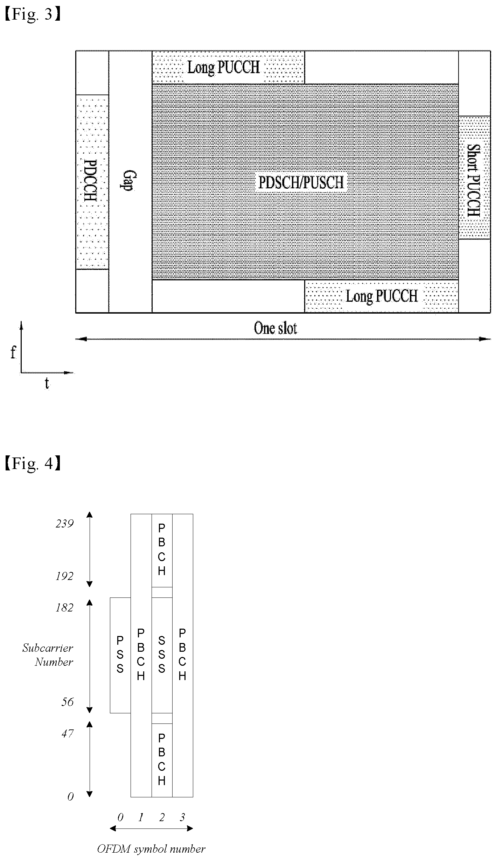

FIG. 4 is a diagram illustrating a synchronization signal block (SSB) structure. A UE may perform cell search, system information acquisition, beam alignment for initial access, DL measurement, and so on based on an SSB. The term SSB is interchangeably used with synchronization signal/physical broadcast channel (SS/PBCH) block.

Referring to FIG. 4, an SSB includes a PSS, an SSS, and a PBCH. The SSB includes four consecutive OFDM symbols, which carry the PSS, PBCH, SSS/PBCH, and PBCH, respectively. Each of the PSS and the SSS includes one OFDM symbol by 127 subcarriers, and the PBCH includes three OFDM symbols by 576 subcarriers. Polar coding and quadrature phase shift keying (QPSK) are applied to the PBCH. The PBCH includes data REs and DMRS REs in each OFDM symbol. There are three DMRS REs per RB, with three data REs between every two adjacent DMRS REs.

## Transmission of SSB and CORESET#0

The above contents are applicable in combination with methods proposed in the present disclosure, which will be described later. Alternatively, the contents may clarify the technical features of the methods proposed in the present disclosure.

As more communication devices require larger communication capacities, the efficient use of limited frequency bands becomes an important issue in next wireless communication systems. In cellular communication systems including LTE/NR systems, a method of using unlicensed bands such as the 2.4 GHz band, which are widely used in the conventional Wi-Fi system, or unlicensed bands such as the 5 GHz and 60 GHz bands, which are newly attracting attention, for traffic offloading is currently discussed. Basically, it is assumed that each communication node competes with other communication nodes to transmit and receive radio signals in unlicensed bands. Thus, each communication node is required to perform channel sensing before transmitting signals to confirm that other communication nodes are not currently transmitting. In this document, the above operation is referred to as listen before talk (LBT) or channel access procedure (CAP). In particular, an operation of verifying whether other communication nodes are transmitting signals is referred to as carrier sensing (CS). When it is determined that other communication nodes are not transmitting signals, it may be said that clear channel assessment (CCA) is confirmed.

In the following description, "LBT" may be replaced with "CAP." In the LTE/NR system, the eNB/gNB or UE needs to perform LBT for signal transmission in unlicensed bands (referred to as U-bands for convenience). In addition, when the eNB/gNB or UE transmits signals, other communication nodes operating in Wi-Fi (or Wireless Gigabit Alliance (WiGig) such as 802.11ad/ay) also need to perform LBT to avoid causing interference. For example, in Wi-Fi standards (802.11ac), the CCA threshold is defined as - 62dBm for non-Wi-Fi signals and -82dBm for Wi-Fi signals. This means that a station (STA) or access point (AP), for instance, will refrain from transmitting signals if non-Wi-Fi signals are received with a power level above -62dBm, in order to avoid causing interference.

For 3GPP Release-15 (Rel-15) NR systems, operations in a band below 52.6 GHz are defined. Discussions are ongoing in future releases to enable NR systems to operate in licensed and/or unlicensed bands of 60/70 GHz (specifically, frequency bands above 52.6 GHz or frequency bands between 52.6 GHz and 71 GHz). In the present disclosure, the corresponding bands are referred to as Frequency Range 2-2 (FR2-2) for convenience. The present disclosure proposes initial access methods including SS/PBCH block transmission and reception and system information block 1 (SIB1) PDCCH/PDSCH transmission and reception in the FR2-2 frequency band. Additionally, the present disclosure also proposes initial access methods including SS/PBCH block transmission and reception and SIB1 PDCCH/PDSCH transmission and reception in FR1 (up to the 7.125 GHz frequency band).

The methods to be described may be equally applicable to the NR systems described earlier (licensed spectrum or shared spectrum scenarios). Thus, it is obvious that the terms, expressions, and structures in this document may be modified to be suitable for the systems in order to implement the technical idea of the present disclosure in the corresponding systems.

Table 4 is an excerpt from Section 13 of 3GPP TS 38.213 v17.1.0, 'UE procedure for monitoring TypeO-PDCCH CSS sets.' Table 5 is an excerpt of Table 13-16 in the above document, showing 'Mapping between the combination of K_SSB and controlResourceSetZero and searchSpaceZero in pdcch-ConfigSIB1 for FR1.' Table 6 is an excerpt of Table 13-17 in the above document, showing 'Mapping between the combination of K_SSB and controlResourceSetZero and searchSpaceZero in pdcch-ConfigSIB 1 to N_GSCN^Offset for FR2.'

Referring to Tables 4 to 6, for both FR1 (up to the 7.125 GHz frequency band) and FR2 (frequency bands above 24.25 GHz), if a first SSB detected by the UE is a non-cell defining SSB (NCD-SSB), information about a cell defining SSB (CD-SSB) in a frequency region surrounding the corresponding SSB may be provided. The NCD-SSB refers to an SSB that does not provide valid configurations for the TypeO-PDCCH CSS set and CORESET#0 or an SSB that does not provide information on monitoring occasions (MOs) for a PDCCH scheduling an SIB1 PDSCH. The CD-SSB refers to an SSB that provides valid configurations for the TypeO-PDCCH CSS set and CORESET#0 or an SSB that provides information on MOs for a PDCCH scheduling an SIB1 PDSCH.

[Table 4]

If a UE detects a first SS/PBCH block and determines that a CORESET for TypeO-PDCCH CSS set is not present, and for $24 \leq k_{SSB} \leq 29$ for FR1 or for $12 \leq k_{SSB} \leq 13$ for FR2, the UE may determine the nearest (in the corresponding frequency direction) global synchronization channel number (GSCN) of a second SS/PBCH block having a CORESET for an associated TypeO-PDCCH CSS set as $N_{GSCN}^{Reference} + N_{GSCN}^{Offset}$. $N_{GSCN}^{Reference}$ is the GSCN of the first SS/PBCH block and $N_{GSCN}^{Offset}$ is a GSCN offset provided by Table 13-16 for FR1 and Table 13-17 for FR2. If the UE detects the second SS/PBCH block and the second SS/PBCH block does not provide a CORESET for TypeO-PDCCH CSS set, as described in clause 4.1, the UE may ignore the information related to GSCN of SS/PBCH block locations for performing cell search.

If a UE detects a SS/PBCH block and determines that a CORESET for TypeO-PDCCH CSS set is not present, and for $k_{SSB} = 31$ for FR1 or for $k_{SSB} = 15$ for FR2, the UE determines that there is no SS/PBCH block having an associated TypeO-PDCCH CSS set within a GSCN range $\left[ N_{GSCN}^{Reference} - N_{GSCN}^{Start}, N_{GSCN}^{Reference} + N_{GSCN}^{End} \right]$. $N_{GSCN}^{Start}$ and $N_{GSCN}^{End}$ are respectively determined by controlResourceSetZero and searchSpaceZero in pdcch-ConfigSIB1. If the GSCN range is $\left[ N_{GSCN}^{Reference}, N_{GSCN}^{Reference} \right]$, the UE determines that there is no information for a second SS/PBCH block with a CORESET for an associated TypeO-PDCCH CSS set on the detected SS/PBCH block.

If a UE does not detect any SS/PBCH block providing a CORESET for TypeO-PDCCH CSS set, as described in clause 4.1, within a time period determined by the UE, the UE may ignore the information related to GSCN of SS/PBCH locations in performing cell search.

[Table 5]

| $k_{SSB}$ | $16 \times controlResourceSetZero + searchSpaceZero$ | $N_{GSCN}^{Offset}$ |
|---|---|---|
| 24 | 0, 1, ..., 255 | 1, 2, ..., 256 |
| 25 | 0, 1, ..., 255 | 257, 258, ..., 512 |
| 26 | 0, 1, ..., 255 | 513, 514, ...., 768 |
| 27 | 0,1, ...,255 | -1, -2, ..., -256 |
| 28 | 0, 1, ..., 255 | -257, -258, ..., -512 |
| 29 | 0, 1, ..., 255 | -513, -514, ...., -768 |
| 30 | 0, 1, ..., 255 | Reserved, Reserved, ..., Reserved |

[Table 6]

| $k_{SSB}$ | $16 \times controlResourceSetZero + searchSpaceZero$ | $N_{GSCN}^{Offset}$ |
|---|---|---|
| 12 | 0, 1, ..., 255 | 1, 2, ..., 256 |

(continued)

| $k_{SSB}$ | $16 \times controlResourceSetZero + searchSpaceZero$ | $N_{GSCN}^{Offset}$ |
|---|---|---|
| 13 | 0, 1, ..., 255 | -1, -2, ..., -256 |
| 14 | 0, 1, ..., 255 | Reserved, Reserved, ..., Reserved |

Specifically, if the value of k_SSB in FR1 is between 24 and 29 or if the value of k_SSB in FR2 is 12 or 13, an offset value equivalent to N_GSCN^Offset is applied from the first SSB (i.e., NCD-SSB). Through the first SSB, the UE may receive signaling indicating the existence of a CD-SSB with a center frequency aligned to a synchronization raster closest to a GSCN to which the corresponding offset value is applied.

If the value of k_SSB in FR1 is 31 or if the value of k_SSB in FR2 is 15, the UE may receive signaling indicating that there are no CD-SSBs in the range of N_GSCN^Reference - N_GSCN^Start and/or N_GSCN^Reference - N_GSCN^End with respect to the first SSB (i.e., NCD-SSB).

Table 7 shows 'Applicable SS raster entries per operating band' extracted from TS 38.101-1 v17.5.0. For band n96 among the NR operating bands in FR1, the GSCN range spans from 9531 to 10363 (i.e., with a spacing of 832), which is greater than a maximum spacing of 768 indicated by the offset of the GSCN in Table 5 above. Therefore, it is necessary to enhance the signaling provided in Table 4. Band n96 is defined in the range of 5925 MHz to 7125 MHz, which are unlicensed bands. Thus, band n96 corresponds to a band for operation with shared spectrum channel access.

[Table 7]

| NR operating band | SS Block SCS | SS Block pattern[1] | Range of GSCN (First - <Step size> - Last) |
|---|---|---|---|
| n1 | 15 kHz | Case A | 5279 - <1> - 5419 |
| n2 | 15 kHz | Case A | 4829 - <1> - 4969 |
| n3 | 15 kHz | Case A | 4517 - <1> - 4693 |
| n5 | 15 kHz | Case A | 2177 - <1> - 2230 |
|  | 30 kHz | Case B | 2183 - <1> - 2224 |
| n7 | 15 kHz | Case A | 6554 - <1> - 6718 |
| n8 | 15 kHz | Case A | 2318 - <1> - 2395 |
| n12 | 15 kHz | Case A | 1828 - <1> - 1858 |
| n13 | 15 kHz | Case A | 1871 - <1> - 1885 |
| n14 | 15 kHz | Case A | 1901 - <1> - 1915 |
| n18 | 15 kHz | Case A | 2156 - <1> - 2182 |
| n20 | 15 kHz | Case A | 1982 - <1> - 2047 |
| n24 | 15 kHz | Case A | 3818 - <1> - 3892 |
|  | 30 kHz | Case B | 3824 - <1> - 3886 |
| n25 | 15 kHz | Case A | 4829 - <1> - 4981 |
| n26 | 15 kHz | Case A | 2153 - <1> - 2230 |
| n28 | 15 kHz | Case A | 1901 - <1> - 2002 |
| n29 | 15 kHz | Case A | 1798 - <1> - 1813 |
| n30 | 15 kHz | Case A | 5879 - <1> - 5893 |
| n34 | 15 kHz | Case A | NOTE 5 |
|  | 30 kHz | Case C | 5036 - <1> - 5050 |
| n38 | 15 kHz | Case A | NOTE 2 |
|  | 30 kHz | Case C | 6437 - <1> - 6538 |

(continued)

| NR operating band | SS Block SCS | SS Block pattern[1] | Range of GSCN (First - <Step size> - Last) |
|---|---|---|---|
| n39 | 15 kHz | Case A | NOTE 6 |
| | 30 kHz | Case C | 4712 - <1> - 4789 |
| n40 | 30 kHz | Case C | 5762 - <1> - 5989 |
| n41 | 15 kHz | Case A | 6246 - <3> -6717 |
| | 30 kHz | Case C | 6252 - <3> -6714 |
| n46[3] | 30 kHz | Case C | 8993 - <1> - 9530 |
| n48 | 30 kHz | Case C | 7884 - <1> -7982 |
| n50 | 30 kHz | Case C | 3590 - <1> - 3781 |
| n51 | 15 kHz | Case A | 3572 - <1> - 3574 |
| n53 | 15 kHz | Case A | 6215 - <1> - 6232 |
| n65 | 15 kHz | Case A | 5279 - <1> - 5494 |
| n66 | 15 kHz | Case A | 5279 - <1> - 5494 |
| | 30 kHz | Case B | 5285 - <1> - 5488 |
| n67 | 15 kHz | Case A | 1850 - <1> - 1888 |
| n70 | 15 kHz | Case A | 4993 - <1> - 5044 |
| n71 | 15 kHz | Case A | 1547 - <1> - 1624 |
| n74 | 15 kHz | Case A | 3692 - <1> - 3790 |
| n75 | 15 kHz | Case A | 3584 - <1> - 3787 |
| n76 | 15 kHz | Case A | 3572 - <1> - 3574 |
| n77 | 30 kHz | Case C | 7711 - <1> - 8329 |
| n78 | 30 kHz | Case C | 7711 - <1> - 8051 |
| n79 | 30 kHz | Case C | 8480 - <16> - 8880[7] |
| | | | 8475 - <1> - 8884[8] |
| n85 | 15 kHz | Case A | 1826 - <1> - 1858 |
| n90 | 15 kHz | Case A | 6246 - <1> - 6717 |
| | 30 kHz | Case C | 6252 - <1> - 6714 |
| n91 | 15 kHz | Case A | 3572 - <1> - 3574 |
| n92 | 15 kHz | Case A | 3584 - <1> - 3787 |
| n93 | 15 kHz | Case A | 3572 - <1> - 3574 |
| n94 | 15 kHz | Case A | 3584 - <1> - 3787 |
| n96[4] | 30 kHz | Case C | 9531 - <1> - 10363 |
| n101 | 15 kHz | Case A | 4754 - <1> - 4768 |
| | 30 kHz | Case C | 4760 - <1> -4764 |
| n102[7] | 30 kHz | Case C | 9531 - <1> - 9877 |
| NOTE 1: SS Block pattern is defined in clause 4.1 in TS 38.213 [8]. | | | |
| NOTE 2: The applicable SS raster entries are GSCN = {6432, 6443, 6457, 6468, 6479, | | | |

6493, 6507, 6518, 6532, 6543}.
NOTE 3: The following GSCN are allowed for operation in band n46:
GSCN = {8996, 9010, 9024, 9038, 9051, 9065, 9079, 9093, 9107, 9121, 9218, 9232, 9246, 9260, 9274, 9288, 9301, 9315, 9329, 9343, 9357, 9371, 9385, 9402, 9416, 9430, 9444, 9458, 9472, 9485, 9499, 9513}.
NOTE 4: The following GSCN are allowed for operation in band n96:
GSCN = {9548, 9562, 9576, 9590, 9603, 9617,9631, 9645, 9659, 9673, 9687, 9701, 9714, 9728, 9742, 9756, 9770, 9784, 9798, 9812, 9826, 9840, 9853, 9867, 9881, 9895, 9909, 9923, 9937, 9951, 9964, 9978, 9992, 10006, 10020, 10034, 10048, 10062, 10076, 10090, 10103, 10117, 10131, 10145, 10159, 10173, 10187, 10201, 10214, 10228, 10242, 10256, 10270, 10284, 10298, 10312, 10325, 10339, 10353}.
NOTE 5: The applicable SS raster entries are GSCN = {5032, 5043, 5054}
NOTE 6: The applicable SS raster entries are GSCN = {4707, 4715, 4718, 4729, 4732, 4743, 4747, 4754, 4761, 4768, 4772, 4782, 4786, 4793}
NOTE 7: The SS raster entries apply for channel bandwidths larger than or equal to 40 MHz
NOTE 8: The SS raster entries apply for channel bandwidths smaller than 40 MHz
NOTE 7: The following GSCN are allowed for operation in band n102:
GSCN = {9548, 9562, 9576, 9590, 9603, 9617,9631, 9645, 9659, 9673, 9687, 9701, 9714, 9728, 9742, 9756, 9770, 9784, 9798, 9812, 9826, 9840, 9853, 9867}.

In FR2-2, two separate frequency bands may be defined for licensed and unlicensed purposes. For licensed band operation, n264 may be defined, which corresponds to the frequency range of 66 GHz to 71 GHz. For unlicensed band operation, n263 may be defined, which corresponds to the frequency range of 57 GHz to 71 GHz.

For n264, the GSCN may be defined as shown in Table 8. Since the GSCN range is approximately from 24674 to 24959 (i.e., with a spacing of 285), the GSCN range exceeds a maximum spacing of 256 indicated by the offset of the GSCN in Table 6 above. Therefore, it is necessary to enhance the signaling provided in Table 4.

In this document, licensed band operation may refer to operation without shared spectrum channel access, and unlicensed band operation may refer to operation with shared spectrum channel access.

[Table 8]

| NR *operating band* | SS Block SCS | SS Block pattern (note) | Range of GSCN (First - <Step size> - Last) |
|---|---|---|---|
| n257 | 120 kHz | Case D | 22388 - <1> - 22558 |
| | 240 kHz | Case E | 22390 - <2> - 22556 |
| n258 | 120 kHz | Case D | 22257 - <1> - 22443 |
| | 240 kHz | Case E | 22258 - <2> - 22442 |
| n259 | 120 kHz | Case D | 23140 - <1> - 23369 |
| | 240 kHz | Case E | 23142 - <2> - 23368 |
| n260 | 120 kHz | Case D | 22995 - <1> - 23166 |
| | 240 kHz | Case E | 22996 - <2> - 23164 |
| n261 | 120 kHz | Case D | 22446 - <1> - 22492 |
| | 240 kHz | Case E | 22446 - <2> - 22490 |
| n262 | 120 kHz | Case D | 23586 - <1> - 23641 |
| | 240 kHz | Case E | 23588 - <2> - 23640 |
| [n264] | 120 kHz | Case D | 24674 <3> 24959 |
| | 480 kHz | Case F | 24677 <12> 24953 |
| | 960 kHz | Case G | 24680 <6> 24950 |
| NOTE 1: SS Block pattern is defined in section 4.1 in TS 38.213 [10]. | | | |

Similarly, for n263, the GSCN may be defined as shown in Table 9. Since the GSCN range is approximately from 24153 to 24956 (i.e., with a spacing of 803), the GSCN range exceeds the maximum spacing of 256 indicated by the offset of the GSCN in Table 6 above. Therefore, it is necessary to enhance the signaling provided in Table 4.

[Table 9]

| NR Operating Band | SS Block SCS | SS Block pattern[1] | Range of GSCN (First - <Step size> - Last) |
|---|---|---|---|
| n263 | 120kHz | Case D | 24153 < NOTE3 > 24956 |
| 57-71GHz | 480kHz | Case F | 24153 < NOTE3 > 24956 |
| | 960kHz | Case G | 24153 < NOTE3 > 24956 |

NOTE1: SS Block pattern is defined in sub clause 4.1 in TS 38.213 [10]

NOTE2: Step size vector with length of 6: < 6 5 6 6 6 >

NOTE3: The following GSCN are allowed for 480kHz and 960kHz Pcell and Scell operation in band n263:

for 480 kHz, GSCN = { 24163, 24180, 24186, 24203, 24209, 24227, 24233, 24250, 24256, 24273, 24279, 24303, 24326, 24349, 24373, 24396, 24419, 24425, 24443, 24448, 24466, 24472, 24489, 24495, 24513, 24518, 24536, 24553, 24559, 24577, 24583, 24600, 24606, 24623, 24629, 24647, 24653, 24676, 24699, 24723, 24746, 24769, 24793, 24804, 24816, 24828, 24839, 24851, 24863, 24874, 24886, 24898, 24909, 24933}.

for 960 kHz, no applicable SS raster entries exist for PCell and PScell.

Therefore, the present disclosure proposes methods of indicating the position of an NCD-SSB or CD-SSB for licensed band operation in FR1 (e.g., for n96) and/or licensed or unlicensed band operation in FR2-2 (e.g., for n263 or n264).

1) <u>Receiver (Entity A) (e.g., UE):</u>

[Method #1] For licensed band operation in FR1 (e.g., for n96) and/or licensed or unlicensed band operation in FR2-2 (e.g., for n263 or n264), if an "offset between the GSCN of an NCD-SSB and the GSCN of a CD-SSB," which is capable of being indicated, increases, all or most of the GSCNs at least within the same band may be indicated by the increased offset.

1-1. As a first method, for a first SSB in band n96 or in the range of 5925 MHz to 7125 MHz, if the $k\_SSB$ value is between 24 to 29 (because band n96 belongs to FR1), the formula $N\_GSCN^{Reference} + M\_GSCN^{step} \cdot N\_GSCN^{Offset}$ may be applied when applying the offset value of $N\_GSCN^{Offset}$ from the first SSB (i.e., NCD-SSB). In this case, the value of $M\_GSCN^{step}$ may be predefined as a value greater than 1. For example, considering that the GSCN range for n96 is from 9531 to 10363 with a spacing of 832 and the maximum spacing indicated by the offset of the GSCN in Table 5 is 768, $M\_GSCN^{step}$ may be defined as $M\_GSCN^{step} = 2$, which is the result of ceiling{832/768}.

Alternatively, this method may be applied to the first SSB related to GSCN values in band n96 or in the range of 5925 MHz to 7125 MHz. Specifically, when GSCN values related to a second SSB span from 9531 to 10363, the first method (i.e., the method of defining a value greater than 1 for $M\_GSCN^{step}$, for example, $M\_GSCN^{step} = 2$) may be applied.

As another method, if some of the values in Table 5 change for "the first SSB in band n96 or in the range of 5925 MHz to 7125 MHz" or for "the first SSB related to GSCN values in band n96 or in the range of 5925 MHz to 7125 MHz," signaling that enables the indication or transmission of all GSCNs at least within the same band may be introduced. For example, when $k\_SSB$ is 26, if some of the $M\_GSCN^{step}$ values are interpreted differently, the maximum value of $N\_GSCN^{offset}$ may be indicated as 832 rather than 768. Alternatively, when $k\_SSB$ is 29, if some of the $N\_GSCN^{offset}$ values are interpreted differently, the minimum value of $N\_GSCN^{offset}$ may be indicated as -832 rather than -768. Alternatively, when $k\_SSB$ is 30, values ranging from 769 to 832 and values ranging from -769 to -832 may also be indicated by all or some of the reserved states.

1-2. As a second method, for a second SSB in band n264 or in the range of 66000 MHz to 71000 MHz (belonging to FR2-2), if the $k\_SSB$ value is 12 or 13 (because band n264 belongs to FR2), the formula $N\_GSCN^{Reference} + M\_GSCN^{step} \cdot N\_GSCN^{Offset}$ may be applied when applying the offset value of $N\_GSCN^{Offset}$ from a first SSB (i.e., NCD-SSB). In this case, the value of $M\_GSCN^{step}$ may be predefined as a value greater than 1. For example, considering that the GSCN range for n264 is from 24674 to 24959 with a spacing of 285 and the maximum spacing indicated by the offset of the GSCN in Table 6 is 256, $M\_GSCN^{step}$ may be defined as $M\_GSCN^{step} = 2$, which is the result of ceiling f 285/256}. Alternatively, the step size may be defined for each SCS of the SSB according to Table 8 as follows: $M\_GSCN^{step} = 3$ (for 120 kHz), $M\_GSCN^{step} = 12$ (for 480 kHz), or $M\_GSCN^{step} = 6$ (for 960 kHz).

Alternatively, this method may be applied to the first SSB related to GSCN values in band n264 or in the range of 66000 MHz to 71000 MHz. Specifically, when the GSCN values related to the first SSB span from 24674 to 24959, the second method (i.e., the method of defining a value greater than 1 for M_GSCN^step, for example, defining M_GSCN^step = 2 or the method of defining a different M_GSCN^step value for each SCS) may be applied. For example, GSCN values related to n264 may vary depending on the SCS of the first SSB. When the SCS of the first SSB is 120 kHz, the second method may be applied if the GSCN values related to the first SSB range from 24674 to 24959. When the SCS of the first SSB is 480 kHz, the second method may be applied if the GSCN values related to the first SSB range from 24677 to 24953. When the SCS of the first SSB is 960 kHz, the second method may be applied if the GSCN values related to the first SSB range from 24680 to 24950.

As another method, if some of the values in Table 6 change for "the first SSB in band n264 or in the range of 66000 MHz to 71000 MHz" or for "the first SSB related to GSCN values in band n264 or in the range of 66000 MHz to 71000 MHz," signaling that enables the indication or transmission of all GSCNs at least within the same band may be introduced. For example, when k_SSB is 12, if some of the N_GSCN^offset values are interpreted differently, the maximum value of N_GSCN^offset may be indicated as 285 rather than 256. Alternatively, when k_SSB is 13, if some of the N_GSCN^offset values are interpreted differently, the minimum value of N_GSCN^offset may be indicated as -285 rather than -256. Alternatively, when k_SSB is 14, values ranging from 257 to 285 and values ranging from - 257 to -285 may also be indicated by all or some of the reserved states.

1-3. As a third method, for a first SSB in band n263 or in the range of 57000 MHz to 71000 MHz (belonging to FR2-2), if the k_SSB value is 12 or 13 (because band n263 belongs to FR2), the formula N_GSCN^Reference + M_GSCN^step · N_GSCN^Offset may be applied when applying the offset value of N_GSCN^Offset from the first SSB (i.e., NCD-SSB). In this case, the value of M_GSCN^step may be predefined as a value greater than 1. For example, considering that the GSCN range for n263 is from 24153 to 24959 with a spacing of 803 and the maximum spacing indicated by the offset of the GSCN in Table 6 is 256, M_GSCN^step may be defined as M_GSCN^step = 4, which is the result of ceiling{803/256}. Alternatively, a different step size may be defined for each SCS of the SSB. For example, M_GSCN^step may be defined as follows: M_GSCN^step = 5 or 6 (for 120 kHz), M_GSCN^step = 24 (for 480 kHz), or M_GSCN^step = 12 (for 960 kHz).

Alternatively, this method may be applied to the first SSB related to GSCN values in band n263 or in the range of 57000 MHz to 71000 MHz. Specifically, when the GSCN values related to the first SSB span from 24153 to 24956, the third method (i.e., the method of defining a value greater than 1 for M_GSCN^step, for example, defining M_GSCN^step = 4 or the method of defining a different M_GSCN^step value for each SCS) may be applied. For example, GSCN values related to n263 may vary depending on the SCS of the first SSB. When the SCS of the first SSB is 120 kHz, the third method may be applied if the GSCN values related to the first SSB range from 24153 to 24960. When the SCS of the first SSB is 480 kHz, the third method may be applied if the GSCN values related to the first SSB range from 24155 to 24958. When the SCS of the first SSB is 960 kHz, the third method may be applied if the GSCN values related to the first SSB range from 24158 to 24954.

As another method, if some of the values in Table 6 change for "the first SSB in band n263 or in the range of 57000 MHz to 71000 MHz" or for "the first SSB related to GSCN values in band n263 or in the range of 66000 MHz to 71000 MHz," signaling that enables the indication or transmission of all GSCNs at least within the same band may be introduced. For example, when k_SSB is 12, if some of the N_GSCN^offset values are interpreted differently, the maximum value of N_GSCN^offset may be indicated as [803 or 807] rather than 256. Alternatively, when k_SSB is 13, if some of the N_GSCN^offset values are interpreted differently, the minimum value of N_GSCN^offset may be indicated as [-803 or -807] rather than -256. Alternatively, when k_SSB is 14, values ranging from 257 to [803 or 807] and values ranging from -257 to [-803 or -807] may also be indicated by all or some of the reserved states.

An additional point to be considered is that when independent rules are defined for each frequency band due to an overlap between n263 and n264, if the first SSB found in the overlapping frequency band is an NCD-SSB, the UE may be confused about whether to apply the second method or the third method. Accordingly, the second method may be applied in the area where n263 and n264 overlap, and the third method (or rules modified from the third method below) may be applied in non-overlapping areas.

Specifically, for a first SSB in band n264 or in the range of 66000 MHz to 71000 MHz (belonging to FR2-2), if the k_SSB value is 12 or 13 (because the corresponding band belongs to FR2), the formula N_GSCN^Reference + M_GSCN^step · N_GSCN^Offset may be applied when applying the offset value of N_GSCN^Offset from the first SSB (i.e., NCD-SSB). In this case, the value of M_GSCN^step may be predefined as a value greater than 1. For example, considering that the GSCN range for n264 is from 24674 to 24959 with a spacing of 285 and the maximum spacing indicated by the offset of the GSCN in Table 6 is 256, M_GSCN^step may be defined as M_GSCN^step = 2, which is the result of ceiling f 285/256}. Alternatively, the step size may be defined for each SCS of the SSB according to Table 8 as follows: M_GSCN^step = 3 (for 120 kHz), M_GSCN^step = 12 (for 480 kHz), or M_GSCN^step = 6 (for 960 kHz).

Alternatively, the second method may be applied to the first SSB related to GSCN values in the range of 66000 MHz to 71000 MHz where the n264 and n263 bands overlap. Specifically, when the GSCN values related to the first SSB span from 24674 to 24959, the second method (i.e., the method of defining a value greater than 1 for M_GSCN^step, for example, defining M_GSCN^step = 2 or the method of defining a different M_GSCN^step value for each SCS) may be applied. The related GSCN values may vary depending on the SCS of the first SSB. When the SCS of the first SSB is 120 kHz, the second method may be applied if the GSCN values related to the first SSB range from 24674 to 24959. When the SCS of the first SSB is 480 kHz, the second method may be applied if the GSCN values related to the first SSB range from 24677 to 24953. When the SCS of the first SSB is 960 kHz, the second method may be applied if the GSCN values related to the first SSB range from 24680 to 24950.

As another method, if some of the values in Table 6 change for "the first SSB in the range of 66000 MHz to 71000 MHz where the n264 and n263 bands overlap" or for "the first SSB related to the GSCN values in the range of 66000 MHz to 71000 MHz where the n264 and n263 bands overlap," signaling that enables the indication or transmission of all GSCNs at least within the corresponding band may be introduced. For example, when k_SSB is 12, if some of the N_GSCN^offset values are interpreted differently, the maximum value of N_GSCN^offset may be indicated as 285 rather than 256. Alternatively, when k_SSB is 13, if some of the N_GSCN^offset values are interpreted differently, the minimum value of N_GSCN^offset may be indicated as -285 rather than -256. Alternatively, when k_SSB is 14, values ranging from 257 to 285 and values ranging from -257 to -285 may also be indicated by all or some of the reserved states.

In addition, for a first SSB in part of band n263 that does not overlap with band n264 or in the range of 57000 MHz to 66000 MHz, if the k_SSB value is 12 or 13 (because the corresponding band belongs to FR2), the formula N_GSCN^Reference + M_GSCN^step · N_GSCN^Offset may be applied when applying the offset value of N_GSCN^Offset from the first SSB (i.e., NCD-SSB). In this case, the value of M_GSCN^step may be predefined as a value greater than 1. For example, considering that the GSCN range for n263 is from 24153 to 24959 with a spacing of 803 and the maximum spacing indicated by the offset of the GSCN in Table 6 is 256, M_GSCN^step may be defined as M_GSCN^step = 4, which is the result of ceiling { 803/256}. Alternatively, a different step size may be defined for each SCS of the SSB. For example, M_GSCN^step may be defined as follows: M_GSCN^step = 5 or 6 (for 120 kHz), M_GSCN^step = 24 (for 480 kHz), or M_GSCN^step = 12 (for 960 kHz).

As another example, considering that the GSCN range for the part of band n263 that does not overlap with band n264 is from 24153 to 24680 with a spacing of 527 and the maximum spacing indicated by the offset of the GSCN in Table 6 is 256, M_GSCN^step may be defined as M_GSCN^step = 3, which is the result of ceiling {527/256}. Alternatively, a different step size may be defined for each SCS of the SSB. For example, M_GSCN^step may be defined as follows: M _GSCN^step = 5 or 6 (for 120 kHz), M_GSCN^step = 24 (for 480 kHz), or M_GSCN^step = 12 (for 960 kHz).

Alternatively, this method may be applied to the first SSB related to GSCN values in the part of band n263 that does not overlap with band n264 or in the range of 57000 MHz to 66000 MHz. Specifically, when the GSCN values related to the first SSB span from 24153 to 24674 or 24680, the corresponding method (i.e., the method of defining a value greater than 1 for M_GSCN^step, for example, defining M_GSCN^step = 3 or 4 or the method of defining a different M_GSCN^step value for each SCS) may be applied. For example, GSCN values related to the corresponding bands may vary depending on the SCS of the first SSB. When the SCS of the first SSB is 120 kHz, the corresponding method may be applied if the GSCN values related to the first SSB range from 24153 to 24674. When the SCS of the first SSB is 480 kHz, the corresponding method may be applied if the GSCN values related to the first SSB range from 24155 to 24677. When the SCS of the first SSB is 960 kHz, the third method may be applied if the GSCN values related to the first SSB range from 24158 to 24680.

As another method, if some of the values in Table 6 change for "the first SSB in the part of band n263 that does not overlap with band n264 or in the range of 57000 MHz to 66000 MHz" or for "the first SSB related to the GSCN values in the part of band n263 that does not overlap with band n264 or in the range of 57000 MHz to 66000 MHz," signaling that enables the indication or transmission of all GSCNs at least within the same band may be introduced. For example, when k_SSB is 12, if some or all of the N_GSCN^offset values are interpreted differently, the maximum value of N_GSCN^offset may be indicated as [803 or 807] or 527 rather than 256. Alternatively, when k_SSB is 13, if some of the N_GSCN^offset values are interpreted differently, the minimum value of N_GSCN^offset may be indicated as [-803 or -807] or -527 rather than -256. Alternatively, when k_SSB is 14, values ranging from 257 to [803 or 807] (or values ranging from 257 to 527) and values ranging from -257 to [-803 or -807] (or values ranging from -257 to -527) may be indicated by all or some of the reserved states.

As another method for the area where n263 and n264 overlap, whether the second or third method is applied may be indicated by an MIB. As shown in Table 11 below, the MIB may indicate that the value of N_SSB^QCL is 32 or 64. If the N_SSB^QCL value is indicated as 32, it may mean that the BS increases SSB transmission opportunities for unlicensed band operation. Therefore, when the N_SSB^QCL value is indicated as 32, the third method (method corresponding to unlicensed band operation) may be applied to the area where n263 and n264 overlap (if the first SSB found in the corresponding frequency range is an NCD-SSB). When the N_SSB^QCL value is indicated as 64, the second method (method corresponding to licensed band operation) may be applied to the area where n263 and n264 overlap (if the first SSB found in the corresponding frequency range is an NCD-SSB).

[Table 10]

| |
|---|
| For operation with shared spectrum channel access in FR2-2, a UE assumes that SS/PBCH blocks in a serving cell that are within a same discovery burst transmission window or across discovery burst transmission windows are quasi co-located with respect to average gain, quasi co-location 'typeA' and 'typeD' properties, when applicable, if a value of ( $\bar{l} \bmod N_{SSB}^{QCL}$ ) is same among the SS/PBCH blocks, where $\bar{l}$ is the candidate SS/PBCH block index. $N_{SSB}^{QCL}$ is either provided by *ssb-PositionQCL* or, if *ssb-PositionQCL* is not provided, obtained from a *MIB* provided by a SS/PBCH block according to Table 4.1-2. The UE can determine an SS/PBCH block index according to ( $\bar{l} \bmod N_{SSB}^{QCL}$ ). The UE assumes that within a discovery burst transmission window, a number of transmitted SS/PBCH blocks on a serving cell is not larger than $N_{SSB}^{QCL}$ and a number of transmitted SS/PBCH blocks with a same SS/PBCH block index is not larger than one. <br><br> For operation without shared spectrum channel access in FR2-2, a UE expects a MIB in a SS/PBCH block to provide *subCarrierSpacingCommon* = 'scs30or120'. |

[Table 11]

| subCarrierSpacingCommon | $N_{SSB}^{QCL}$ |
|---|---|
| scs15or60 | 32 |
| scs30or120 | 64 |

1-4. As a fourth method, different M_GSCN^step values may be applied depending on whether GSCNs related to a first SSB are GSCN values defined for n263 or GSCN values defined for n264. For example, the GSCN values for n264 may be defined as shown in Table 13 (i.e., GSCN values for a 120 kHz SSB start from 24674 with a spacing of 3, and GSCN values for a 480 kHz SSB start from 24677 with a spacing of 12), and the GSCN values for n263 may be defined by the formulas shown in Table 14. If the GSCNs related to the first SSB are the GSCN values defined for n263, M_GSCN^step may be defined as M_GSCN^step = 4. Alternatively, a different step size may be defined for each SCS of the SSB. For example, M_GSCN^step may be defined as follows: M_GSCN^step = 5 or 6 (for 120 kHz), M_GSCN^step = 24 (for 480 kHz), or M_GSCN^step = [12 or 6] (for 960 kHz). On the other hand, if the GSCNs related to the first SSB are the GSCN values defined for n264, M_GSCN^step may be defined as M_GSCN^step = [2 or 3]. The step size may be defined for each SCS of the SSB according to Table 8 as follows: M_GSCN^step = 3 (for 120 kHz), M_GSCN^step = 12 (for 480 kHz), or M_GSCN^step = 6 (for 960 kHz).

[Table 12]

| NR operating band | SS Block SCS | SS Block pattern (note) | Range of GSCN (First - <Step size> - Last) |
|---|---|---|---|
| n257 | 120 kHz | Case D | 22388 - <1> - 22558 |
| | 240 kHz | Case E | 22390 - <2> - 22556 |
| n258 | 120 kHz | Case D | 22257 - <1> - 22443 |
| | 240 kHz | Case E | 22258 - <2> - 22442 |
| n259 | 120 kHz | Case D | 23140 - <1> - 23369 |
| | 240 kHz | Case E | 23142 - <2> - 23368 |
| n260 | 120 kHz | Case D | 22995 - <1> - 23166 |
| | 240 kHz | Case E | 22996 - <2> - 23164 |
| n261 | 120 kHz | Case D | 22446 - <1> - 22492 |
| | 240 kHz | Case E | 22446 - <2> - 22490 |

(continued)

| NR operating band | SS Block SCS | SS Block pattern (note) | Range of GSCN (First - <Step size> - Last) |
|---|---|---|---|
| n262 | 120 kHz | Case D | 23586 - <1> - 23641 |
| | 240 kHz | Case E | 23588 - <2> - 23640 |
| [n264] | 120 kHz | Case D | 24674 - <3> - 24959 |
| | 480 kHz | Case F | 24677 - <12> - 24953 |
| | 960 kHz (NOTE 2) | Case G | 24680 - <6> - 24950 |

NOTE 1: SS Block pattern is defined in section 4.1 in TS 38.213 [10].
NOTE 2: This SSB SCS is not used for initial access.

[Table 13]

| NR Operating Band | SS Block SCS | SS Block pattern[1] | Range of GSCN (First - <Step size> - Last) |
|---|---|---|---|
| n257 | 120 kHz | Case D | 22388 - <1> - 22558 |
| | 240 kHz | Case E | 22390 - <2> - 22556 |
| n258 | 120 kHz | Case D | 22257 - <1> - 22443 |
| | 240 kHz | Case E | 22258 - <2> - 22442 |
| n259 | 120 kHz | Case D | 23140 - <1> - 23369 |
| | 240 kHz | Case E | 23142 - <2> - 23368 |
| n260 | 120 kHz | Case D | 22995 - <1> - 23166 |
| | 240 kHz | Case E | 22996 - <2> - 23164 |
| n261 | 120 kHz | Case D | 22446 - <1> - 22492 |
| | 240 kHz | Case E | 22446 - <2> - 22490 |
| n262 | 120 kHz | Case D | 23586 - <1> - 23641 |
| | 240 kHz | Case E | 23588 - <2> - 23640 |
| n263[2] | 120 kHz | Case D | 24153 - <3> - 24960 |
| | 480 kHz | Case F | 24162 - <12> - 24954 |
| | 960 kHz[3] | Case G | 24162 - <6> - 24954 |

NOTE 1: SS Block pattern is defined in clause 4.1 in TS 38.213 [10].
NOTE 2: Table 13 contains GSCN allowed for Pcell and PScell operation in band n263 for 120 kHz and 480 kHz SCS.
NOTE 3 :_SS Block SCS of 960 kHz is not used for initial access.

[Table 14]

| SS Block SCS | Range of GSCN |
|---|---|
| 120 kHz | $24156 + 6 \times N - 3 \times floor((N+5)/18)$, N=0:137 |
| 480 kHz | $24162 + 24 \times N - 12 \times floor((N+4)/18)$, N=0:33 |

For example, the fourth method may include the content of Table 15 below.

[Table 15]

If a UE detects a first SS/PBCH block and determines that a CORESET for TypeO-PDCCH CSS set is not present, and for $24 \leq k_{SSB} \leq 29$ for FR1 or for $12 \leq k_{SSB} \leq 13$ for FR2, the UE may determine the nearest (in the corresponding frequency direction) global

synchronization channel number (GSCN) of a second SS/PBCH block having a CORESET for an associated TypeO-PDCCH CSS set as $N_{GSCN}^{Reference} + N_{GSCN}^{Size} \cdot N_{GSCN}^{Offset} \cdot N_{GSCN}^{Reference}$ is the GSCN of the first SS/PBCH block, $N_{GSCN}^{Size} = 1$ for FR1 and FR2-1, and $N_{GSCN}^{Size} = 4$ for FR2-2 if $N_{GSCN}^{Reference}$ is given by Table 5.4.3.3-2 of [8-2, TS 38.101-2] otherwise $N_{GSCN}^{Size} = 2$ for FR2-2, and $N_{GSCN}^{Offset}$ is a GSCN offset provided by Table 13-16 for FR1 and Table 13-17 for FR2. If the UE detects the second SS/PBCH block and the second SS/PBCH block does not provide a CORESET for TypeO-PDCCH CSS set, as described in clause 4.1, the UE may ignore the information related to GSCN of SS/PBCH block locations for performing cell search.

1-5. As a fifth method, if GSCNs related to a first SSB belongs to FR2-2, a specific M_GSCN^step value may be applied. Accordingly, UE implementation may be simplified because it is not necessary to define separate values depending on the SCS of the SSB. For example, M_GSCN^step may be defined as M_GSCN^step = 3. Alternatively, the step size may be defined for each SCS of the SSB as follows: M_GSCN^step = 3 (for 120 kHz) or M_GSCN^step = 12 (for 480 kHz). Alternatively, the step size may be defined in common as follows: M_GSCN^step = 6.

For example, the fifth method may include the content of Table 16 below.

[Table 16]

If a UE detects a first SS/PBCH block and determines that a CORESET for TypeO-PDCCH CSS set is not present, and for $24 \leq k_{SSB} \leq 29$ for FR1 or for $12 \leq k_{SSB} \leq 13$ for FR2, the UE may determine the nearest (in the corresponding frequency direction) global synchronization channel number (GSCN) of a second SS/PBCH block having a CORESET for an associated TypeO-PDCCH CSS set as $N_{GSCN}^{Reference} + N_{GSCN}^{Size} \cdot N_{GSCN}^{Offset} \cdot N_{GSCN}^{Reference}$ is the GSCN of the first SS/PBCH block, $N_{GSCN}^{Size} = 1$ for FR1 and FR2-1, and $N_{GSCN}^{Size} = 3$ for FR2-2, and

$N_{GSCN}^{Offset}$ is a GSCN offset provided by Table 5 for FR1 and Table 6 for FR2. If the UE detects the second SS/PBCH block and the second SS/PBCH block does not provide a CORESET for TypeO-PDCCH CSS set, as described in clause 4.1, the UE may ignore the information related to GSCN of SS/PBCH block locations for performing cell search.

1-6. As a sixth method, if GSCNs related to a first SSB belongs to FR2-2, all or some of the reserved states in Table 6 may be used to solve the problem of the GSCN range being larger than 256, which is the maximum spacing indicated by the offset of the GSCN in Table 6 above. For example, when k_SSB is 14, offsets from {256 + 1} to {256 + 256} may be signaled by 256 reserved states. Alternatively, when k_SSB is 14, offsets from {-256 - 128} to {-256 - 1} and offsets from {256 + 1} to {256 + 128} may be signaled by the 256 reserved states. For example, considering that GSCNs in FR2-2 are spaced at multiples of 3 in common as shown in Tables 17 to 19, offset values corresponding to the reserved states may be configured in multiples of 3. Specifically, when k_SSB is 14, offsets from {255 + 1*3} to {255 + 256*3} (or part thereof) may be signaled by the 256 reserved states. Alternatively, when k_SSB is 14, offsets from {-255 - 128*3} to {-255 - 1*3} and offsets from {255 + 1*3} to {255 + 128*3} (or part thereof) may be signaled by the 256 reserved states. Tables 17 to 19 are excerpted from 3GPP TS 38.101-2 v17.6.0. Specifically, Table 18 corresponds to "Table 5.4.3.3-1: Applicable SS raster entries per operating band," and Table 19 corresponds to "Table 5.4.3.3-2: Allowed GSCN for operation in band n263 for 120 kHz and 480 kHz."

[Table 17]

5.4.3.3 Synchronization raster entries for each operating band
The synchronization raster for each band is give in Table 18. The distance between applicable GSCN entries is given by the <Step size> indicated in Table 18.

[Table 18]

| NR Operating Band | SS Block SCS | SS Block pattern[1] | Range of GSCN (First - <Step size> - Last) |
|---|---|---|---|
| n257 | 120 kHz | Case D | 22388 - <1> - 22558 |
| | 240 kHz | Case E | 22390 - <2> - 22556 |
| n258 | 120 kHz | Case D | 22257 - <1> - 22443 |
| | 240 kHz | Case E | 22258 - <2> - 22442 |
| n259 | 120 kHz | Case D | 23140 - <1> - 23369 |
| | 240 kHz | Case E | 23142 - <2> - 23368 |
| n260 | 120 kHz | Case D | 22995 - <1> - 23166 |
| | 240 kHz | Case E | 22996 - <2> - 23164 |
| n261 | 120 kHz | Case D | 22446 - <1> - 22492 |
| | 240 kHz | Case E | 22446 - <2> - 22490 |
| n262 | 120 kHz | Case D | 23586 - <1> - 23641 |
| | 240 kHz | Case E | 23588 - <2> - 23640 |
| n263 | 120 kHz | Case D | Table 18 |
| | 480 kHz | Case F | |
| | 960 kHz[2] | Case G | 24162 - <6> - 24954 |
| NOTE 1: SS Block pattern is defined in clause 4.1 in TS 38.213 [10]. | | | |
| NOTE 2: SS Block SCS of 960 kHz is not used for initial access. | | | |

[Table 19]

| SS Block SCS | Range of GSCN |
|---|---|
| 120 kHz | 24156 + 6 * N - 3 * floor((N+5)/18), N=0:137 |
| 480 kHz | 24162 + 24 * N - 12 * floor((N+4)/18), N=0:33 |

1-7. As a seventh method, if GSCNs related to a first SSB belongs to FR2-2, the interpretation of N_GSCN^Offset values may vary depending on the SCS of the SSB. Referring to Tables 17 to 19, it is observed that GSCNs have a spacing of 6 or 3 (the spacing becomes 3 other than of 6 every 18 times) when the SCS of the SSB is 120 kHz, GSCNs have a spacing of 24 or 12 (the spacing becomes 12 other than 246 every 18 times) when the SCS of the SSB is 480 kHz, and GSCNs have a spacing of 6 when the SCS of the SSB is 960 kHz. That is, when the N_GSCN^Offset value, K is indicated, the UE may recognize the presence of the SSB at a K-th GSCN based on the current GSCN of the SSB (i.e., N_GSCN^Reference) (based on Tables 17 to 19). For example, for a 480 kHz SSB, when the k_SSB value is signaled as 12, the N_GSCN^Offset value is signaled as 3, and when the GSCN of the corresponding SSB corresponds to N = 10 in Table 19, a GSCN position notified by the corresponding SSB may be a position corresponding to N = (10+3) in Table 19.

[Method #2] For licensed or unlicensed band operation on FR2-2 (e.g., for n263 or n264), when it is indicated that there is no CD-SSB within a specific GSCN range, the GSCN range may be interpreted as follows.

A rule may be established to interpret N_GSCN^Start and/or N_GSCN^End in Table 4 differently when GSCNs related to a first SSB belongs to FR2-2. For example, when k_SSB is indicated as 15 for an SSB in FR2-2 band, if controlResourceSetZero and searchSpaceZero in pdcch-ConfigSIB 1 are K1 and K2, respectively, the UE may consider N_GSCN^Start and N_GSCN^End as X * K1 and Y * K1, respectively. In this case, (X, Y) may be a specific value such as (3, 3) or (6, 6), independently of the SCS of the SSB. Alternatively, (X, Y) may be defined to vary based on the SCS of the SSB as follows: (3, 3) for 120 kHz, (12, 12) for 480 kHz, and (6, 6) for 960 kHz.

2) Operation between Receiver and Transmitter

When the BS operates in FR1 or FR2-2 band (according to the proposals of this specification), the BS may indicate a GSCN offset value if a first SSB is an NCD-SSB. The UE may determine the position of a CD-SSB around the first SSB by recognizing the GSCN offset value according to the methods proposed in Method #1 described above.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by a base station, but the operations may also be performed by the relay node.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

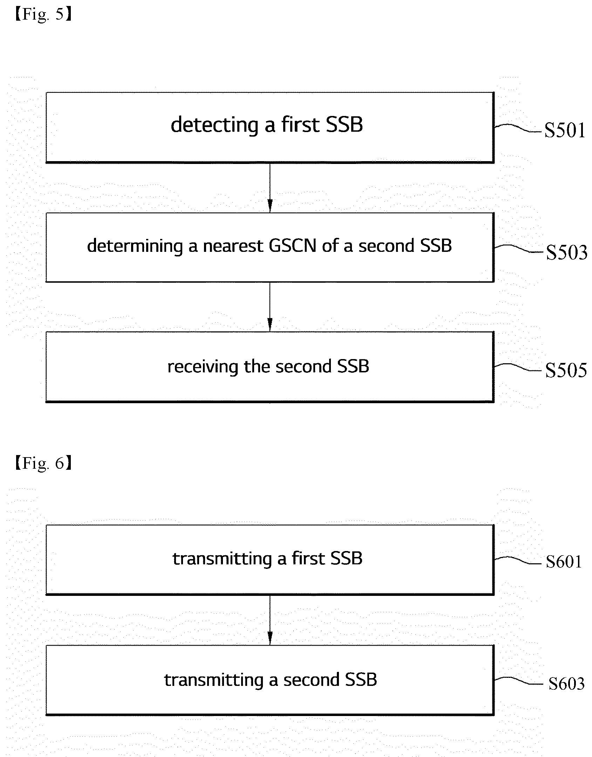

FIGS. 5 and 6 are flowcharts of signal transmission and reception methods according to embodiments of the present disclosure.

Referring to FIG. 5, an embodiment of the present disclosure may be performed by a UE. The embodiment may include: detecting a first SSB (S501); determining a nearest GSCN of a second SSB (S503); and receiving the second SSB (S505). Referring to FIG. 6, another embodiment of the present disclosure may be performed by a BS. The embodiment may include: transmitting a first SSB (S601); and transmitting a second SSB (S603).

In addition to the operations of FIG. 5 and/or FIG. 6, one or more of the operations described in 'Transmission of SSB and CORESET#0' may be also performed.

For example, referring to Table 16 in the context of step S503, the UE determines that there is no CORESET for a Type0-PDCCH CSS set in the detected first SSB. Based on the determination, the UE determines the nearest GSCN of the second SSB having a CORESET for the Type0-PDCCH CSS set.

A synchronization raster indicates the frequency positions of SSBs that the UE is capable of using for acquisition of system information when there is no explicit signaling for the SSB positions. The frequency position of an SSB is defined by a related GSCN. Therefore, in the context of step S505, the UE may receive the second SSB based on the frequency position of the second SSB related to the nearest GSCN of the second SSB.

Since the second SSB has the CORESET for the Type0-PDCCH CSS set, the UE performs cell search based on the second SSB. If k_SSB has a value in the range of 24 to 29 in the FR1 band or a value in the range of 12 to 13 in the FR2 band, the GSCN of the second SSB is determined as $N\_GSCN^{Reference} + N\_GSCN^{Size} * N\_GSCN^{Offset}$. Here, k_SSB is a subcarrier offset indicating the spacing from the lowest subcarrier in a common resource block (CRB) to the lowest subcarrier in the first SSB (the quantity k_SSB is the subcarrier offset from subcarrier 0 in common resource block $N\_CRB^{SSB}$ to subcarrier 0 of the SS/PBCH block). If k_SSB has a value other than 24 to 29 in the FR1 band or a value other than 12 to 13 in the FR2 band, the frequency position of an SSB may be derived based on the corresponding k_SSB value. If k_SSB has a value in the range of 24 to 29 in the FR1 band or a value in the range of 12 to 13 in the FR2 band, the frequency location of an SSB may not be directly indicated by k_SSB but may be derived based on a GSCN determined by $N\_GSCN^{Reference} + N\_GSCN^{Size} * N\_GSCN^{Offset}$.

$N\_GSCN^{Reference}$ is the GSCN of the first SSB. $N\_GSCN^{Size}$ is the step size applied to $N\_GSCN^{Offset}$. $N\_GSCN^{Offset}$ is the GSCN offset determined based on Table 5 and Table 6.

Therefore, in step S503, the nearest GSCN may be determined based on (i) the GSCN of the first SSB, (ii) the step size, and (iii) the GSCN offset.

In the FR1 and FR2-1 bands, the step size is determined as 1. In the FR2-2 band, the step size is determined as 3. Since FR1, FR2-1, and FR2-2 are frequency bands in which the first SSB is capable of being detected, the step size is determined based on the frequency band in which the first SSB is detected.

If the frequency band in which the first SSB is detected is FR1, the GSCN offset is determined based on Table 5. If the frequency band in which the first SSB is detected is FR2, the GSCN offset is determined based on Table 6. Referring to Tables 5 and 6, the GSCN offset is determined by k_SSB and 16 * controlResourceSetZero + searchSpaceZero, where k_SSB is the subcarrier offset described above, controlResourceSetZero is an RRC parameter used to configure CORESET#0 of the initial BWP, which may have a value in the range of 0 to 15 (the IE ControlResourceSetZero is used to configure CORESET#0 of the initial BWP), and searchSpaceZero is an RRC parameter for determining a common search space with ID #0, which may have a value in the range of 0 to 15 (the IE SearchSpaceZero is used to configure SearchSpace#0 of the initial BWP)

Referring to Tables 8 and 9, the step size generally varies based on the SCS rather than the frequency band. In the embodiments of the present disclosure, the step size is determined to be the same for an SCS of 120 kHz and an SCS of 480 kHz. Referring to the GSCN range in Table 19, the GSCN range for the 120 kHz SCS is 801 from 24156 to 24957. Thus, the GSCN range in the 120 kHz SCS is greater than 768, which is obtained by multiplying 256, which is the maximum GSCN offset in Table 6, by the step size of 3 (the GSCN range for the 480 kHz SCS is 768 from 24162 to 24930, which is the same as the maximum GSCN offset multiplied by the step size). Therefore, it is difficult to indicate the entire GSCN range for the 120 kHz SCS with the step size of 3. However, if the step size is determined to be the same for the SCSs, it is possible to indicate most GSCN ranges while simplifying UE processing. Considering the trade-off relationship, the method may be more effective than a method of configuring a different step size for each SCS.

From the perspective of the BS, the first SSB that the BS transmits in step S601 is an SSB having no CORESET for the TypeO-PDCCH CSS set. The SSB transmitted by the BS in step S603 is an SSB having the CORESET for the TypeO-PDCCH CSS set. The method of determining the nearest GSCN of the second SSB according to the implementation examples is the same as the method related to UE operations.

In addition to the operations described with reference to FIG. 5, one or more of the operations described in FIGS. 1 to 4 and/or the operations described in 'Transmission of SSB and CORESET#0' may be additionally performed in combination..

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

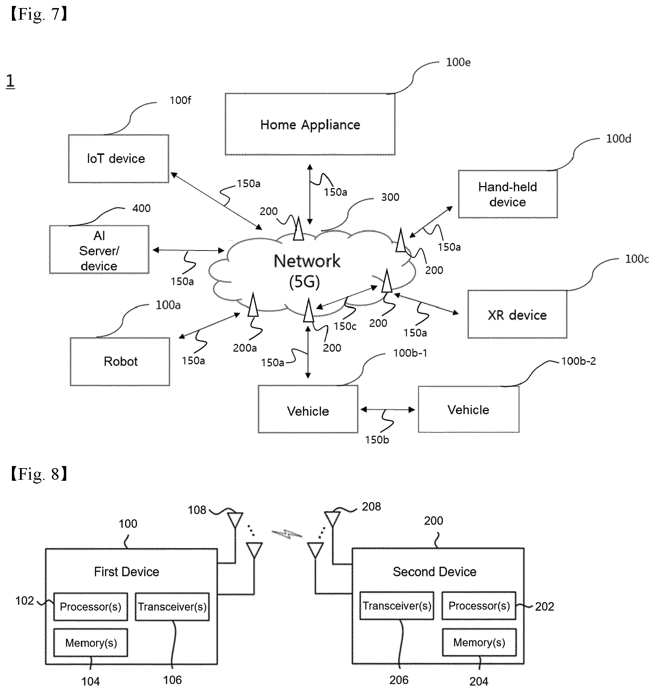

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

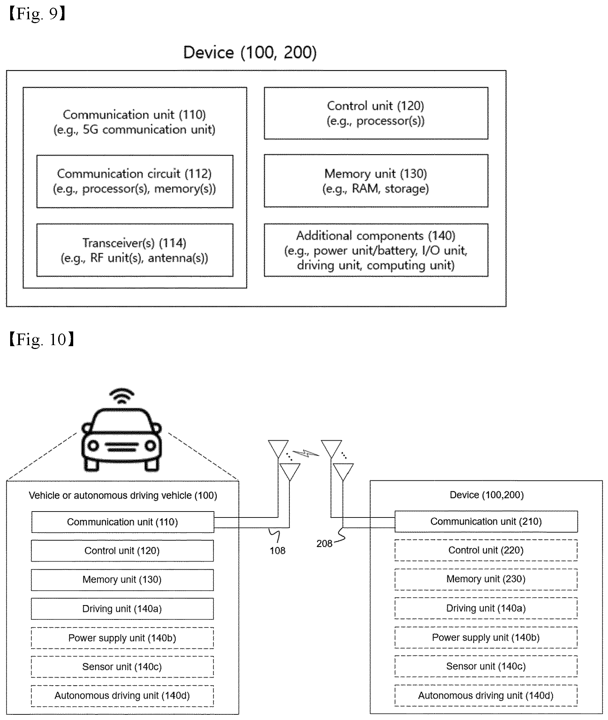

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

As described above, the present disclosure is applicable to various wireless communication systems.

**Claims**

1. A method of receiving a signal by a user equipment (UE) in a wireless communication system, the method comprising:

   detecting a first synchronization signal and physical broadcast channel block (SSB);
   based on a determination that a control resource set (CORESET) for a TypeO-physical downlink control channel (TypeO-PDCCH) common search space (CSS) set is not present in the first SSB, determining a nearest global synchronization channel number (GSCN) of a second SSB having a CORESET for the TypeO-PDCCH CSS set;
   receiving the second SSB based on the nearest GSCN; and
   performing cell search based on the second SSB;
   wherein the nearest GSCN is determined based on (i) a GSCN of the first SSB, (ii) a step size, and (iii) a GSCN offset, and
   wherein the step size is determined based on a frequency band in which the first SSB is detected.

2. The method of claim 1, wherein determining the nearest GSCN is performed based on that a subcarrier offset for a spacing from a lowest subcarrier in a common resource block (CRB) to a lowest subcarrier in the first SSB is within a predetermined range.

3. The method of claim 1, wherein the nearest GSCN is determined to be a value obtained by adding a product of the step size and the GSCN offset to the GSCN of the first SSB.

4. The method of claim 1, wherein the step size is determined to be 1 based on that the frequency band is in Frequency Range 1 (FR1) or Frequency Range 2-1 (FR2-1), and
   wherein the step size is determined to be 3 based on that the frequency band is in Frequency Range 2-2 (FR2-2).

5. The method of claim 4, wherein the step size is determined to be a same for cases in which a subcarrier spacing (SCS) of the frequency is 120 kHz and 480 kHz.

6. The method of claim 2, wherein the GSCN offset is determined based on the frequency band and the subcarrier offset.

7. A user equipment (UE) configured to receive a signal in a wireless communication system, the UE comprising:

   at least one transceiver;
   at least one processor; and
   at least one memory operably connected to the at least one processor and configured to store instructions that, when executed, cause the at least one processor to perform specific operations comprising:

   detecting a first synchronization signal and physical broadcast channel block (SSB);
   based on a determination that a control resource set (CORESET) for a TypeO-physical downlink control channel (TypeO-PDCCH) common search space (CSS) set is not present in the first SSB, determining a nearest global synchronization channel number (GSCN) of a second SSB having a CORESET for the TypeO-PDCCH CSS set; and
   receiving the second SSB based on the nearest GSCN,
   wherein the nearest GSCN is determined based on (i) a GSCN of the first SSB, (ii) a step size, and (iii) a GSCN offset, and
   wherein the step size is determined based on a frequency band in which the first SSB is detected.

8. The UE of claim 7, wherein determining the nearest GSCN is performed based on that a subcarrier offset for a spacing from a lowest subcarrier in a common resource block (CRB) to a lowest subcarrier in the first SSB is within a predetermined range.

9. The UE of claim 7, wherein the nearest GSCN is determined to be a value obtained by adding a product of the step size and the GSCN offset to the GSCN of the first SSB.

10. The UE of claim 7, wherein the step size is determined to be 1 based on that the frequency band is in Frequency Range 1 (FR1) or Frequency Range 2-1 (FR2-1), and
wherein the step size is determined to be 3 based on that the frequency band is in Frequency Range 2-2 (FR2-2).

11. The cell search method of claim 10, wherein the step size is determined to be a same for cases in which a subcarrier spacing (SCS) of the frequency is 120 kHz and 480 kHz.

12. The cell search method of claim 8, wherein the GSCN offset is determined based on the frequency band and the subcarrier offset.

13. An apparatus configured for a user equipment (UE), the apparatus comprising:

at least one processor; and
at least one computer memory operably connected to the at least one processor and configured to, when executed, cause the at least one processor to perform operations comprising:

detecting a first synchronization signal and physical broadcast channel block (SSB);
based on a determination that there is no control resource set (CORESET) for a TypeO-physical downlink control channel (TypeO-PDCCH) common search space (CSS) set in the first SSB, determining a nearest global synchronization channel number (GSCN) of a second SSB having a CORESET for the TypeO-PDCCH CSS set; and
receiving the second SSB based on the nearest GSCN,
wherein the nearest GSCN is determined based on (i) a GSCN of the first SSB, (ii) a step size, and (iii) a GSCN offset, and
wherein the step size is determined based on a frequency band in which the first SSB is detected.

14. A computer-readable non-volatile storage medium having at least one computer program configured to cause at least one processor to perform operations comprising:

detecting a first synchronization signal and physical broadcast channel block (SSB);
based on a determination that there is no control resource set (CORESET) for a TypeO-physical downlink control channel (TypeO-PDCCH) common search space (CSS) set in the first SSB, determining a nearest global synchronization channel number (GSCN) of a second SSB having a CORESET for the TypeO-PDCCH CSS set; and
receiving the second SSB based on the nearest GSCN,
wherein the nearest GSCN is determined based on (i) a GSCN of the first SSB, (ii) a step size, and (iii) a GSCN offset, and
wherein the step size is determined based on a frequency band in which the first SSB is detected.

15. A method of transmitting a signal by a base station (BS) in a wireless communication system, the method comprising:

transmitting a first synchronization signal and physical broadcast channel block (SSB) that a control resource set (CORESET) for a TypeO-physical downlink control channel (TypeO-PDCCH) common search space (CSS) set is not present; and
transmitting a second SSB having a CORESET for the TypeO-PDCCH CSS set,
wherein a nearest global synchronization channel number (GSCN) of the second SSB is determined based on (i) a GSCN of the first SSB, (ii) a step size, and (iii) a GSCN offset, and
wherein the step size is determined based on a frequency band in which the first SSB is detected.

16. A base station (BS) configured to receive a signal in a wireless communication system, the BS comprising:

at least one transceiver;
at least one processor; and
at least one memory operably connected to the at least one processor and configured to store instructions that, when executed, cause the at least one processor to perform specific operations comprising:

transmitting a first synchronization signal and physical broadcast channel block (SSB) that a control resource set (CORESET) for a TypeO-physical downlink control channel (TypeO-PDCCH) common search space (CSS) set is not present; and

transmitting a second SSB having a CORESET for the TypeO-PDCCH CSS set,

wherein a nearest global synchronization channel number (GSCN) of the second SSB is determined based on (i) a GSCN of the first SSB, (ii) a step size, and (iii) a GSCN offset, and

wherein the step size is determined based on a frequency band in which the first SSB is detected.

【Fig. 1】

【Fig. 2】

【Fig. 3】

【Fig. 4】

【Fig. 5】

detecting a first SSB ——S501

determining a nearest GSCN of a second SSB ——S503

receiving the second SSB ——S505

【Fig. 6】

transmitting a first SSB ——S601

transmitting a second SSB ——S603

【Fig. 7】

<u>1</u>

【Fig. 8】

【Fig. 9】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【Fig. 10】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
| --- |
| **PCT/KR2023/006628** |

| A. | CLASSIFICATION OF SUBJECT MATTER |
| --- | --- |

**H04L 5/00**(2006.01)i; **H04W 56/00**(2009.01)i; **H04J 11/00**(2006.01)i; **H04W 74/08**(2009.01)i; **H04W 72/23**(2023.01)i; **H04W 72/04**(2009.01)i; **H04W 48/10**(2009.01)i; **H04W 76/28**(2018.01)i; **H04L 27/26**(2006.01)i

According to International Patent Classification (IPC) or to both national classification and IPC

| B. | FIELDS SEARCHED |
| --- | --- |

Minimum documentation searched (classification system followed by classification symbols)

H04L 5/00(2006.01); H04B 7/155(2006.01); H04W 28/06(2009.01); H04W 28/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 탐색(cell search), GSCN(global synchronization channel number), SSB(synchronization signal block), 스텝 사이즈(step size), 오프셋(offset)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | SAMSUNG. Maintenance on initial access aspects for NR from 52.6 GHz to 71 GHz. R1-2203858, 3GPP TSG RAN WG1 #109-e, e-Meeting. 25 April 2022. See pages 6 and 8; and table 3. | 1-16 |
| Y | WO 2021-217503 A1 (LENOVO (BEIJING) LIMITED) 04 November 2021 (2021-11-04) See paragraphs [0042] and [0044]. | 1-16 |
| Y | ERICSSON. SSB-CORESET0 offsets for the 57 - 71 GHz band. R1-2200407, 3GPP TSG RAN WG1 #107bis-e, e-Meeting. 11 January 2022. See page 6. | 5,11 |
| A | LG ELECTRONICS. Remaining issues of initial access aspects to support NR above 52.6 GHz. R1-2204611, 3GPP TSG RAN WG1 #109-e, e-Meeting. 25 April 2022. See section 1. | 1-16 |
| A | US 2022-0116821 A1 (APPLE INC.) 14 April 2022 (2022-04-14) See paragraphs [0050]-[0052]. | 1-16 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 September 2023** | **01 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.

**PCT/KR2023/006628**

| Patent document cited in search report | | | Publication date (day/month/year) | Patent family member(s) | | | Publication date (day/month/year) |
|---|---|---|---|---|---|---|---|
| WO | 2021-217503 | A1 | 04 November 2021 | CN | 115516910 | A | 23 December 2022 |
| | | | | EP | 4144126 | A1 | 08 March 2023 |
| | | | | US | 2023-0164715 | A1 | 25 May 2023 |
| US | 2022-0116821 | A1 | 14 April 2022 | WO | 2020-146791 | A1 | 16 July 2020 |

Form PCT/ISA/210 (patent family annex) (July 2022)

**REFERENCES CITED IN THE DESCRIPTION**

**Non-patent literature cited in the description**

- UE procedure for monitoring TypeO-PDCCH CSS sets. *3GPP TS 38.213 v17.1.0*